# EUROPEAN PATENT APPLICATION

(11) **EP 3 288 162 A2**
(43) Date of publication of application: **28.02.2018**
(21) Application number: 17166948.4
(22) Date of filing: 21.03.2012
(51) Int. Cl.: H02K 47/08, F03G 7/08, H02N 2/18

(54) **MAGNETO-INDUCTIVE ENERGY HARVESTING**

(30) Priority: 23.03.2011 US 201161466561 P
(62) Divisional of application: 12760342.1
(71) Applicant: Microstrain, Inc., Williston, VT 05495 (US)
(72) Inventor: LEAMON, Thomas Moore, Richmond, VT 05477 (US); FRIED, Max B., Burlington, VT 05401 (US); CHURCHILL, David L., Burlington, VT 05401 (US)
(74) Representative: Wynne-Jones, Lainé and James LLP

(57) **Abstract**

A device for harvesting energy from a vibrating substrate includes a base, a parallelogram of stacked beams, an end connector, a first coil of wire, and a first permanent magnet. The base is for mounting to the substrate for receiving vibrational energy derived from the substrate. Each beam of the parallelogram of stacked beams has a first end and a second end. The first end is stationary with respect to the base and connected to receive vibrational energy from the base so the second end can vibrate. The second ends are connected to the end connector. The first permanent magnet is stationary with respect to the base. The first coil of wire is mounted to vibrate with the parallelogram of stacked beams. The first coil of wire extends around the first permanent magnet. When the parallelogram of stacked beams vibrates, the first coil of wire vibrates with respect to the first permanent magnet and a first current is induced in the first coil of wire.

## Description

### Priority

This application claims the benefit of US Provisional Patent Application 61/433,426, filed March 23, 2011, "Magneto-inductive energy harvesting," incorporated herein by reference.

### Related References

This application is related to the following commonly assigned patent applications all of which are incorporated herein by reference:
"Wind Turbines and Other Rotating Structures with Instrumented Load
   Sensor Bolts or Instrumented Load Sensor Blades," US Patent Application 12/761,259 to David Maass et al., filed April 15, 2010 ("the '259 application"), docket number 115-067;
"Harvesting Power from Multiple Energy Sources," Patent Application 13/038,339 to Christopher P. Townsend et al, filed March 1, 2011 ("the '339 application"), docket number 115-072;
"Energy harvesting for wireless sensor operation and data transmission," US Patent 7,081,693 to Michael John Hamel et al., filed March 5, 2003, docket number 115-008;
"Shaft mounted energy harvesting for wireless sensor operation and data transmission," US Patent 7,256,505 to Steven W. Arms, et al., filed January 31, 2004, docket number 115-014.

This application is also related to the following paper: "Harvesting Power from Multiple Energy Sources for Wireless Sensors," by Christopher P. Townsend, Michael J. Hamel, and Steven W. Arms, presented at the Fifth Energy Harvesting Workshop and Tutorial at the Roanoke, Virginia, March 2-4, 2010, incorporated herein by reference.

### Field

This application generally relates to a system for harvesting mechanical energy and converting it to electrical energy. More particularly it relates to a system for transforming vibratory motion into electrical energy.

### Background

Various schemes have been proposed to harvest mechanical energy from the environment, such as vibration, as described in the above referenced patents, patent applications, and paper. However, the amount of energy harvested has not been sufficient for many applications. Thus, better systems for harvesting mechanical energy and converting to electrical energy are needed, and these systems are provided by the present patent application.

### Summary

One aspect of the present patent application is a device for harvesting energy from a vibrating substrate. The device includes a base, a parallelogram of stacked beams, an end connector, a first coil of wire, and a first permanent magnet. The base is for mounting to the substrate for receiving vibrational energy derived from the substrate. Each beam of the parallelogram of stacked beams has a first end and a second end. The first end is stationary with respect to the base and connected to receive vibrational energy from the base so the second end can vibrate. The second ends are connected to the end connector. The first permanent magnet is stationary with respect to the base. The first coil of wire is mounted to vibrate with the parallelogram of stacked beams. The first coil of wire extends around the first permanent magnet. When the parallelogram of stacked beams vibrates, the first coil of wire vibrates with respect to the first permanent magnet and a first current is induced in the first coil of wire.

Another aspect of the present patent application is a device for harvesting energy from a vibrating substrate. The device includes a base, a plurality of beams, a first coil of wire, and a first permanent magnet. The base is for mounting to the substrate for receiving vibrational energy derived from the substrate. The plurality of beams has a first end and a second end, The first end is stationary with respect to the base and connected to receive vibrational energy from the base so the second end can vibrate. The first coil of wire is mounted to vibrate with the plurality of beams. The first coil of wire extends around the first permanent magnet so current is induced in the first coil of wire when the first coil of wire vibrates. The first coil of wire is electrically connected so electricity derived from the induced current is conducted along the beam of the plurality of beams.

Another aspect of the present patent application is a device for harvesting energy from a vibrating substrate. The device includes a base, a plurality of beams, a first coil of wire, a first permanent magnet, a second coil of wire, and a second permanent magnet. The base is for mounting to the substrate for receiving vibrational energy derived from the substrate. The plurality of beams has a first end and a second end. The first end is for connection for receiving vibrational energy derived from the substrate. The first coil of wire and the second coil of wire are mounted to vibrate with the plurality of beams. The first coil of wire extends around the first permanent magnet. The second coil of wire extends around the second permanent magnet. The first coil of wire is optimized for receiving energy having a first intensity. The second coil of wire is optimized for receiving energy having a second intensity different from the first intensity.

Another aspect of the present patent application is a device for harvesting energy from a vibrating substrate. The device includes a base, a plurality of beams, a first coil of wire, a first permanent magnet, a second coil of wire, a second permanent magnet, a first diode, and a second diode. The base is for mounting to the substrate for receiving vibrational energy derived from the substrate. The first coil of wire, the second coil of wire, the first diode and the second diode are mounted to vibrate with the plurality of beams. The plurality of beams has a first end and a second end. The first end is for connection for receiving vibrational energy derived from the substrate. The first coil of wire extends around the first permanent magnet. The second coil of wire extends around the second permanent magnet. The first coil of wire is connected to the first diode and the second coil of wire is connected to the second diode. The first diode is connected to rectify current induced in the first coil of wire and the second diode is connected to rectify current induced in the second coil of wire.

Another aspect of the present patent application is a device for harvesting energy from a vibrating substrate. The device includes a base, a beam, a first coil of wire, a first permanent magnet, and a load. The base is for mounting to the substrate for receiving vibrational energy derived from the substrate. The beam has a first end and a second end. The first end is stationary with respect to the base and connected to receive vibrational energy from the base so the second end can vibrate. The first coil of wire is mounted to vibrate with the beam. The first coil of wire extends around the first permanent magnet so current is induced in the first coil of wire when the first coil of wire vibrates. The load is mounted to vibrate with the beam and is electrically connected to receive electricity derived from the induced current.

Another aspect of the present patent application is a device for harvesting energy from a vibrating substrate. The device includes a base, a beam, a first coil of wire, and a first permanent magnet. The base is for mounting to the substrate for receiving vibrational energy derived from the substrate. The beam has a first end and a second end. The first end is stationary with respect to the base and connected to receive vibrational energy from the base so the second end can vibrate. The first coil of wire extends around the first permanent magnet so current is induced in the first coil of wire when the first coil of wire vibrates. The beam is shaped so end regions are wider than a central region.

### Brief Description of the Drawings

FIG. 1a is a three dimensional view of an energy harvester of the present application having parallelogram stacked beams, magnet stacks that are stationary with respect to the base, coils that vibrate with the beams, and coil wires that connect to beams for conduction;
FIG. 1b is a three dimensional view similar to FIG. 1a with a circuit board that receives and uses electrical energy harvested from vibration and conducted along the beams;
FIGS. 2a-2c and 3a-3c are schematic side views comparing the vibration of a single vibrating beam with the vibration of parallelogram stacked beams and showing that the substantially linear motion of the parallelogram stacked beams allows the air gap between magnet and coil to be less than for the single vibrating beam;
FIG. 4a is a schematic side view of a stack of magnets without coils in which adjacent magnets of the stack have same poles facing each other;
FIG. 4b is a side view of the stack of magnets of FIG. 4a extending through coils;
FIG. 5 is a schematic diagram illustrating the vibrating coils electrically connected for conduction along the beams to a full bridge rectifier and a storage element;
FIG. 6a is a top view illustrating the magnetic field of a pair of linear magnets with like poles facing like those in FIG. 4a;
FIG. 6b is a top view illustrating the magnetic field of a single linear magnet;
FIG. 6c is a top view illustrating the magnetic field of a two pairs of linear magnets each with like poles facing but with one pair having facing polls opposite the other;
FIG. 6d is a top view illustrating how vibratory movement of the coil crosses magnetic field lines of two pairs of linear magnets each with like poles facing but with one pair having facing polls opposite the other as in FIG. 6c;
FIG. 7a is a schematic side view illustrating coils with different wiring and dimensional parameters all mounted to vibrate with the same parallelogram stacked beams;
FIG. 7b is a graph illustrating the input vibration power as a function of amplitude and the electrical output of two coils with different wiring and dimensional parameters both mounted to vibrate with the same parallelogram stacked beams;
FIG. 7c is a table illustrating wiring, dimensional, and electrical parameters for a coil, parameters of the magnets, beams and proof mass, and the power output from a representative device of the present patent application;
FIGS. 8a and 8b are three dimensional view similar to FIGS. 1b and 1a with a circuit board that receives rectifies, and acts as a load using electrical energy harvested from vibration and may also provide electricity for conduction along the beams;
FIG. 8c is a schematic diagram illustrating the vibrating coils electrically connected to energy harvesting circuits including full bridge rectifiers on the vibrating beams, allowing for individually optimized coil/magnet units, and with output connected for conduction along the vibrating beams to a stationary storage element;
FIG. 9 is a table and a block diagram illustrating specifications, parts, and interconnections of an energy harvesting wireless sensor node;
FIG. 10a is a three dimensional view of an EH-Link circuit board mounted to a cover;
FIG. 10b is a three dimensional view of a box for containing the energy harvesting wireless sensor node of FIG. 9, the EH-Link circuit board and cover of FIG. 10a and one of the devices shown in FIGS. 1a, 1b, 7a, 8a, 8b or 11a-11d; and
FIGS. 11a-11d are views of another embodiment of the energy harvester of FIG. 1a having shaped beams, stops, a stainless steel proof mass that clamps the shaped beams, and solderable contacts.

### Detailed Description

The present applicants designed a device that harvests energy from a vibrating source of energy. One embodiment of the vibrating device includes a beam for absorbing mechanical energy from the vibrating source and generating electrical power by using the vibrating beam to provide relative motion between a magnet and a coil. Another embodiment of the device provides improved mechanical connection for conductors connected to receive the electrical power so generated. Other embodiments of the device provide for local use of the electrical power so generated.

The vibrating source of energy can be any device or structure that vibrates, such as general industrial equipment, heating, ventilation, and air conditioning systems, rotating equipment, such as pumps, compressors, fans, drive shafts, flywheels, and gearboxes. The vibrating source of energy can also be rotating equipment, airframes, or gearboxes on aircraft, and rotating equipment on helicopters, such as the shafts, swashplates, pitch links, yokes, hubs, blades, spindle, scissor links, lead/lag dampers, and pitch horns.

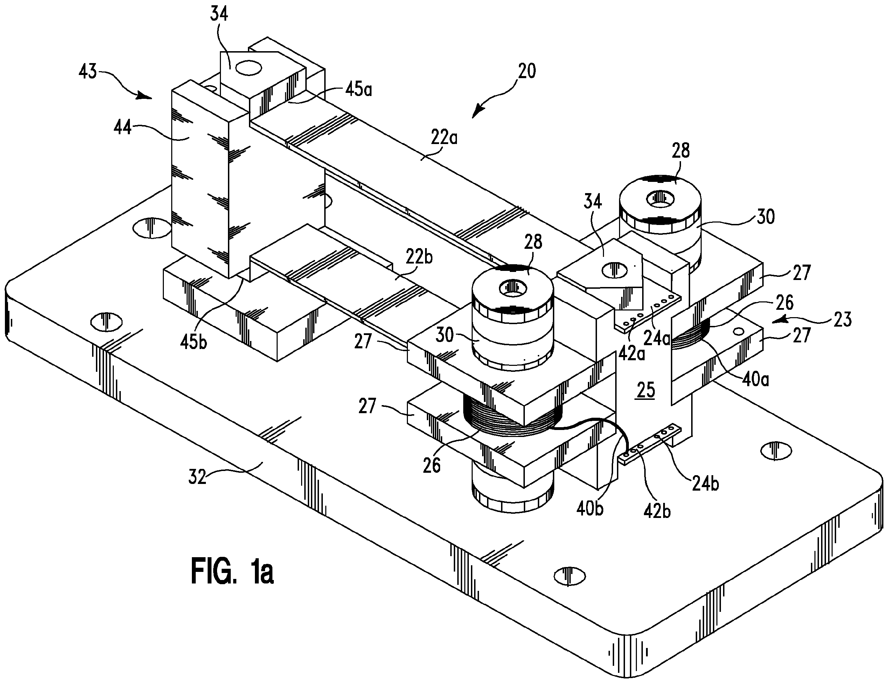

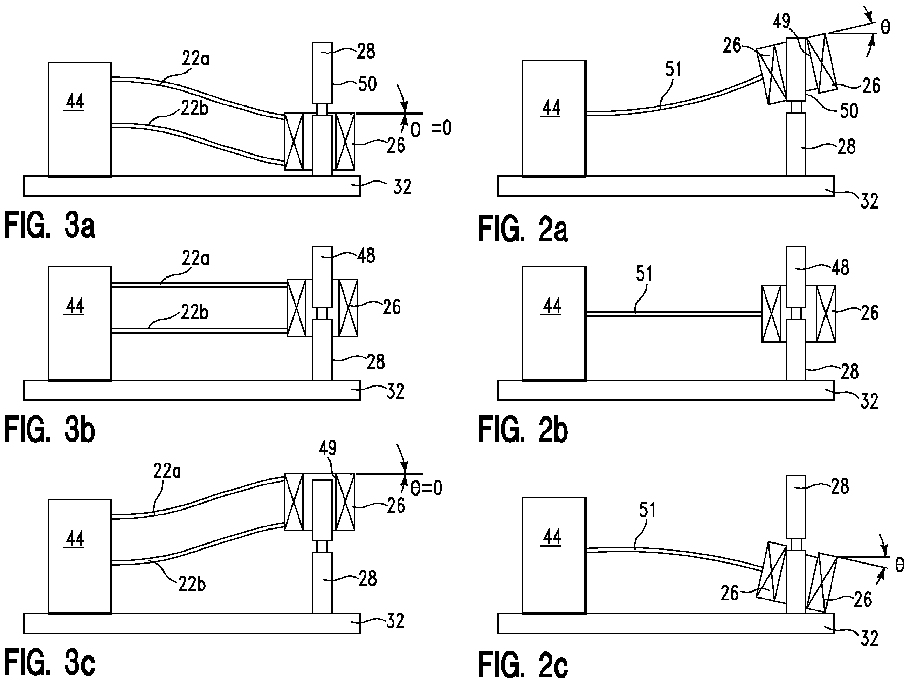

Dual beam energy harvesting device 20 includes parallelogram mounted beams 22a, 22b. Parallelogram mounted beams 22a, 22b have vibrating end 23 in which beam-ends 24a, 24b are connected with spring spacer 25 so beams 22a, 22b vibrate together, as shown in FIG. 1a. Such parallelogram mounted beams 22a, 22b vibrate with substantially reduced angulation as compared with a single beam, as shown in FIGS. 2a-2c and FIGS. 3a-3c, and as further described herein below.

While in the '259 application stacks of magnets were mounted on the parallelogram mounted beams and passed within a stationary bobbin and coil assembly, in one embodiment of the present application, coils 26 are mounted on coil bobbin 27 that is itself mounted on parallelogram mounted beams 22a, 22b and extend around stationary stacks 28 of permanent magnets 30, as shown in FIGS. 1a, 1b, FIGS. 3a-3c, and FIGS. 4a-4b.

In one embodiment of the present application, applicants provided stacks 28 of permanent magnets 30 stationary while mounting coils 26 that vibrate with beams 22a, 22b. Because stacks 28 of permanent magnets 30 are stationary, and because their magnetic fields are stationary with respect to nearby frame case 32, eddy currents in frame case 32 are avoided, and damping of vibration of beams 22a, 22b from generation of such unwanted currents in nearby ferrous materials is avoided. Thus, more of the mechanical energy of vibration of beams 22a, 22b is available for harvesting. In addition, magnetic forces from nearby ferrous materials that could pull a moveable magnet stack out of its neutral position are avoided. In one embodiment, beams 22a, 22b were made of titanium, which is non-ferrous and non-magnetic while base 32 and clamps 34 were made of brass.

In the past, the lifetime of wires extending from such a vibrating coil and connected to a stationary printed circuit board, would have been severely restricted. The wires would eventually break because of the repeated back and forth strains on the wires. Thus, strong preference was for designs in which the coil was stationary and the magnets vibrated, as in the '259 patent application.

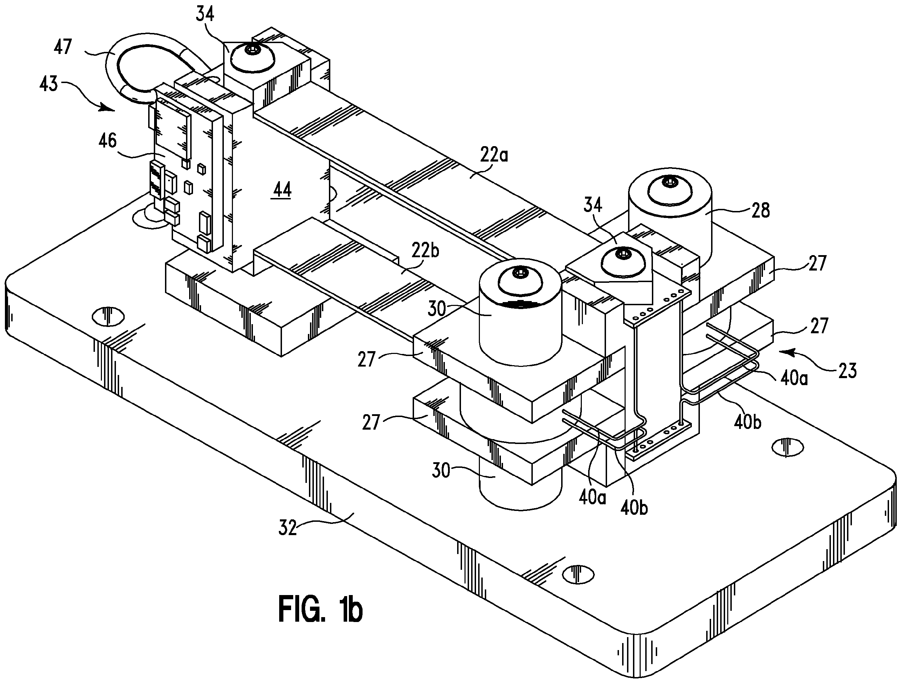

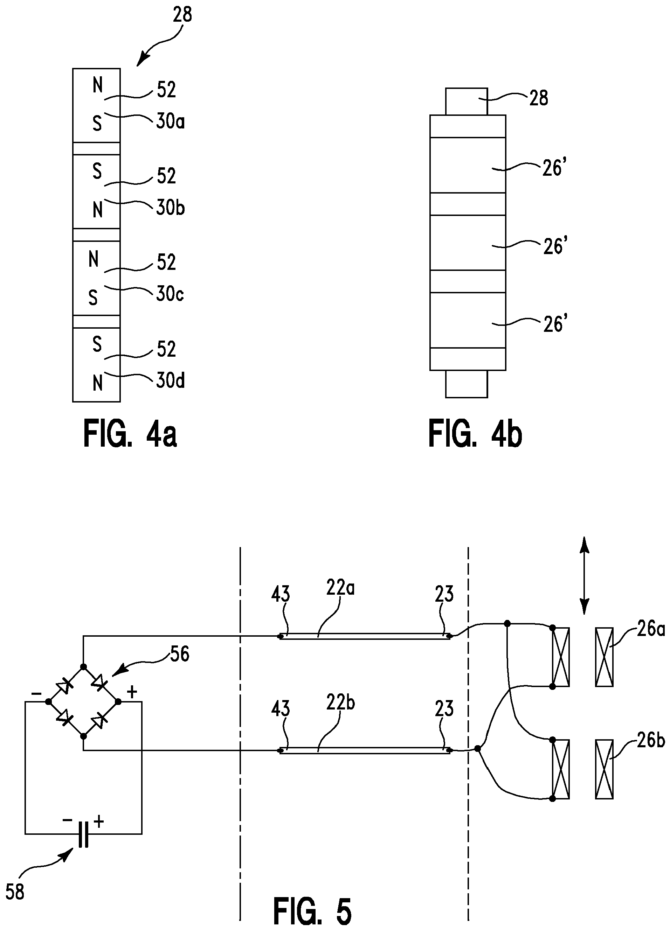

However, the present applicants found a way to avoid such strain on wires extending from a coil mounted on a vibrating beam. In one embodiment, wires 40a, 40b merely extend from coil 26 to holes 42a, 42b for solder connections with beams 22a, 22b, as shown in FIGS. 1a, 1b. In one embodiment, alternating current generated in coil 26 then travels along each of the two beams 22a, 22b, as shown in FIG. 5 where the energy harvested from vibration may be rectified for use in an electronic circuit.

In this embodiment, because coil 26 is mounted on beams 22a, 22b and is vibrating with beams 22a, 22b wires extending from coil 26a, 26b to beams 22a, 22b are extending from a moving coil to a connector that is moving with the coil, as shown in FIGS. 2a, 2b. Thus, beams 22a, 22b, coil 26, and wires 28a, 28b are all vibrating together, and wires 40a, 40b experience no repeated strains from the vibration of beams 22a, 22b.

Parallelogram mounted beams 22a, 22b also have fixed end 43 that includes spring base 44 to which beams 22a, 22b are connected. Electrical connection 47 to stationary ends 45a, 45b of beams 22a, 22b with stationary printed circuit board 46 are also strain-free connections, as shown in FIG. 1b. Thus, lifetime of the system is significantly improved compared to a system in which wires from a beam-mounted coil extend directly to an off-beam connector.

In addition, the present applicants found that even if beams 22a, 22b were fabricated of a spring material, such as spring steel, that had substantially lower inherent conductivity than copper wires, beams 22a, 22b had such large cross section that they conducted current with little resistive loss. In addition, applicants found that they could electrically isolate each beam. For example, they could provide beams 22a, 22b with an insulating coating, such as by anodizing, that prevented shorting from one beam to the other. Alternatively, other insulating coatings for the beams, such as plastic, and other insulating techniques, such as providing insulating washers, could be used. Thus, the present applicants found a way to provide coil 26 mounted on vibrating beam 20 in which vibrating coil 26 surrounds stack 28 of stationary magnets 30a-3b and current induced in vibrating coil 26 is conducted through beams 22a, 22b to an off-beam circuit without lifetime degradation or shorting.

The present applicants recognized that parallelogram mounted beams 22a, 22b are only one of several ways of providing two strain-free current paths from vibrating coil 26 to a stationary off-beam circuit. Dual beam versions of a single vibrating beam can also be provided that satisfactorily carry the current. For example, a coil can be mounted, and have its wires connected to dual vibrating beams in which the conductive beams are next to each other extending in the same direction in the same plane. An insulator, such as an air gap or a line of plastic, is located between the two conductive beams. Alternatively, the dual vibrating conductive beams to which wires from the coil are soldered can be located one on top of the other sandwiching a thin insulating later.

The present applicants found that the embodiment with parallelogram-mounted beams 22a, 22b, provided a path of vibration that was substantially less angular than was the path of vibration for a single vibrating beam 51 or such dual beam versions of the single vibrating beam, as shown in FIGS. 2a-2c for single vibrating beam 51 and FIGS. 3a-3c for parallelogram-mounted beams 22a, 22b. This reduced angulation allowed air gap 48 separating interior surface 49 of coil 26 from exterior surface 50 of stack 28 of stationary permanent magnets 30 to be substantially reduced compared to what would be required with the larger angulation of a single vibrating beam. Effectively removing the angulation thus allows a very small air gap, providing improved magnetic coupling between magnets 30a-30b and moving coil 26. The reduced air gap 48 and the improved magnetic coupling allowed by the straighter path of vibration allows significantly improved energy generation. Other schemes for providing more nearly straight-path vibration, such as providing a longer beam or mounting coil 26 on a coil spring or on a diaphragm spring, can also be used.

The present applicants found that the embodiment with parallelogram-mounted beams 22a, 22b, also rejected off-axis loads because this structure is anisotropic in stiffness. While bending and vibration around one axis is permitted, both other axes of the structure offer high stiffness, so energy dissipation from vibration around those axes is substantially avoided.

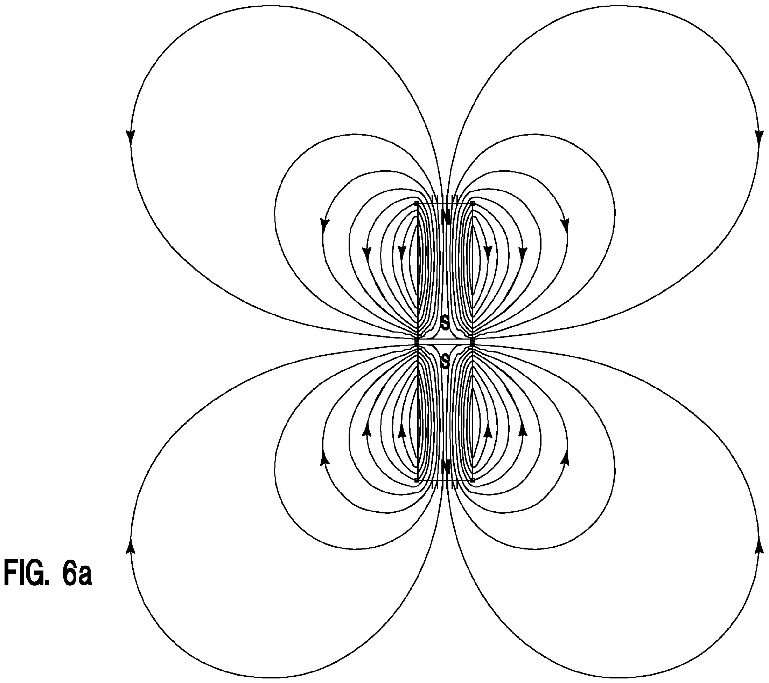

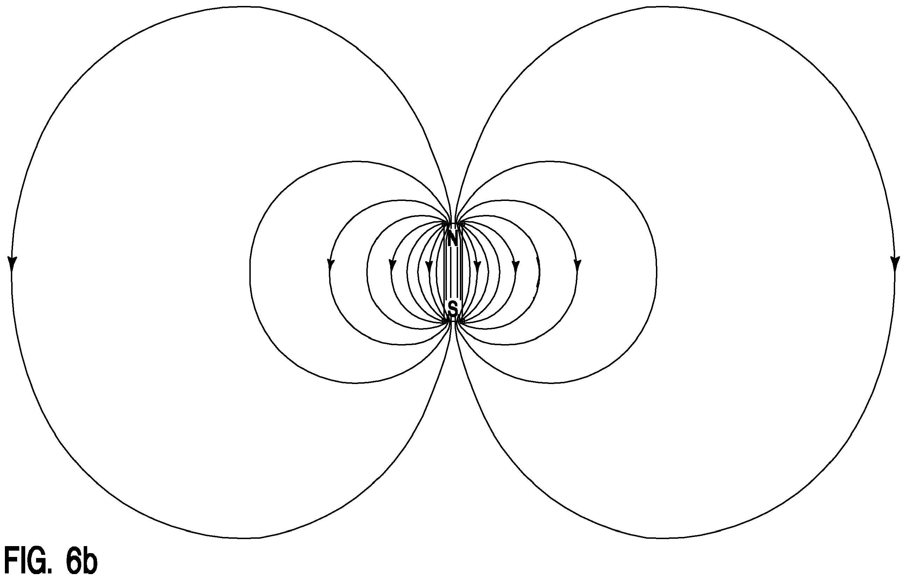

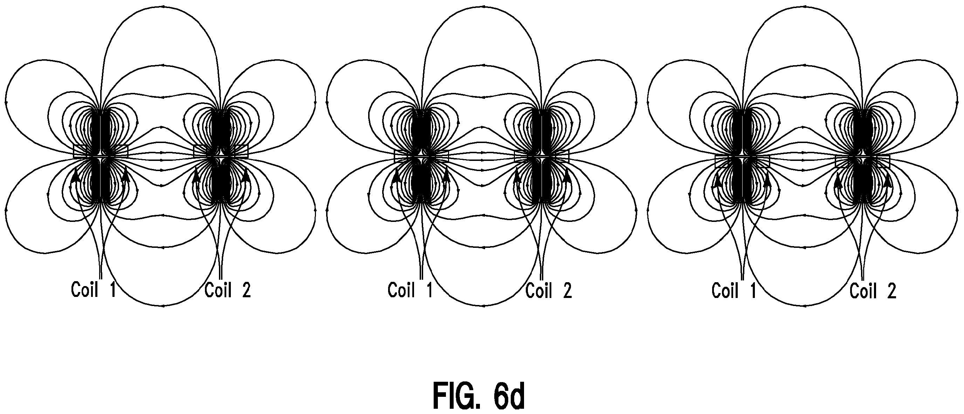

In one embodiment, stack 28 of stationary permanent magnets 30a, 30b are arranged with oppositely directed magnetic fields within coil 26, providing a stationary magnetic field as illustrated in FIGS. 4a and 6a. This compares with the magnetic field of a single magnet in FIG. 6b. Current is induced in vibrating coil 26 surrounding stack 28 of permanent magnets 30a, 30b as wires of vibrating coil 26 repeatedly crosses the magnetic field lines that extend at an angle nearly perpendicular to the axis of magnets 30a, 30b and to the direction of motion of coil 26. Because oppositely directed permanent magnets 30a, 30b force the field to extend in a direction extending nearly perpendicular to the axis of magnets 30a, 30b, and because of the higher intensity of the field in that region, a larger amount of current is induced than would be the case with a single magnet.

In one embodiment, stack 28 of stationary permanent magnets 30a-30c are arranged with multiple oppositely directed magnetic fields to induce current in several oppositely wound coils 26', as shown in FIGS. 4a, 4b. In this embodiment, 3 NdFeB magnets facing in the same direction are in each of the four opposed magnet sections 52 of stack 28 shown in FIG. 4a. Other numbers of magnets in each section and other numbers of sections can be used. Or a single permanent magnet can be used instead of a stack. Magnet sections 52 are separated by non-ferromagnetic material spacers 54, such as copper or brass. Magnets in adjacent magnetic sections 52 are oppositely oriented. For example the three magnets that make up magnet 30a are each oriented with north pole up and then the next three magnets below copper spacer 54 that make up magnet 30b are oriented with south pole up. Thus, the example of FIG. 4a shows three copper spacers 54 and three regions of high fields in the vicinity of three spacers 54 from the opposing magnetic fields. Thus, substantial current will be generated in the three coil windings 26' of FIG. 4b as coils 26' vibrate with parallelogram-mounted beams 22a, 22b.

In one embodiment, a pair of coils 26a, 26b vibrates with beams 22a, 22b, as shown in FIGS. 1a, 1b, FIG. 5, and FIGS. 6c-6d.

FIG. 5 illustrates an embodiment with rectifier bridge 56 and electrical storage element 58 of an energy harvesting circuit located on the fixed end 43 side of beams 22a, 22b while coils 26a, 27b vibrate with beams 22a, 22b.

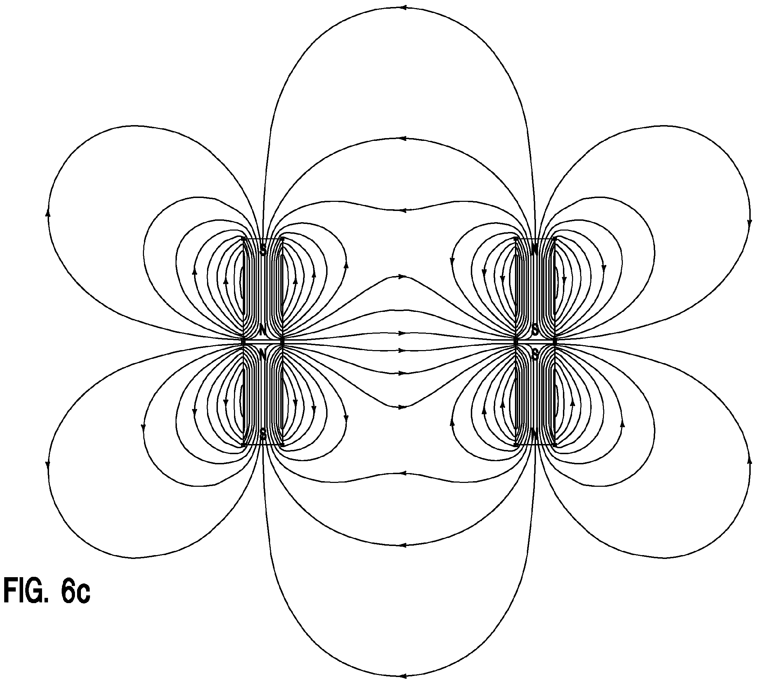

Each coil 26a, 26b surrounds its own stationary stack 28 of permanent magnets 30. The association of pairs of stacks of magnets shapes the magnetic field into a pair of loops to provide a more intense field between the stationary stacks of magnets. The association of pairs of stacks of magnets also angles the magnetic field more perpendicularly to the axis of the stacks of magnets and perpendicularly to the direction of motion of coils 26 both at the ends of each magnet with the stacks and at the ends of each stack of magnets, as shown in FIGS. 6c-6d. Both the higher intensity field and the more perpendicular direction of the field facilitate more efficient induction of current in each coil 26.

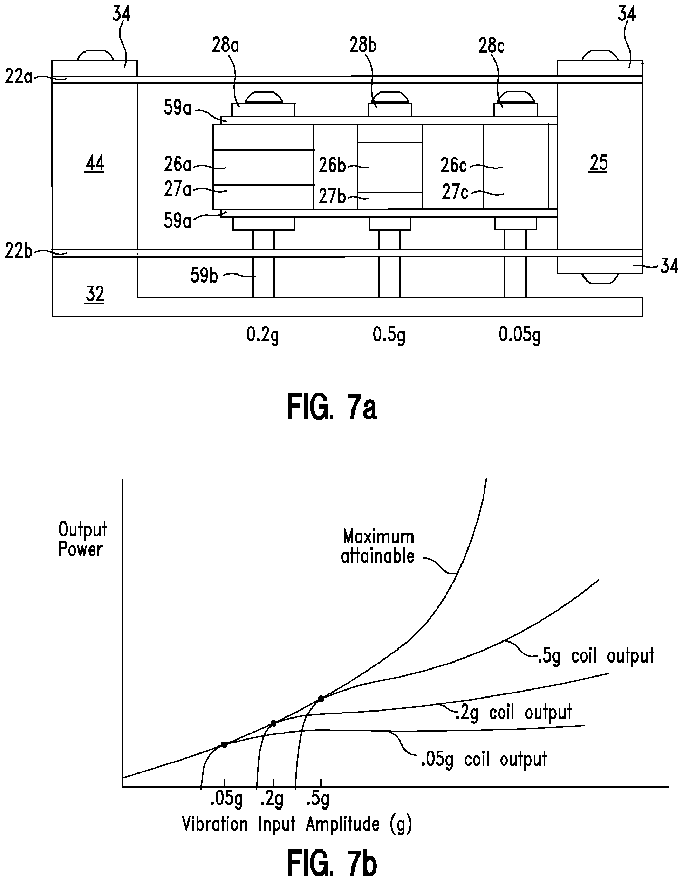

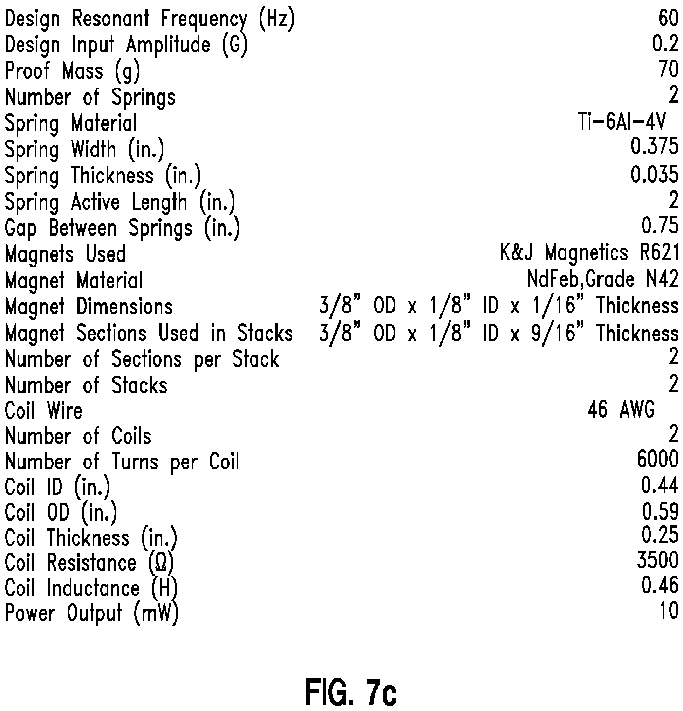

One embodiment provides for efficiently harvesting energy over a wide range of vibration amplitudes, as shown in FIGS. 7a, 7b. Separate stacks 28a, 28b, 28c of magnets and separate windings 26a, 26b, 26c around bobbins 27a, 27b, 27c are provided that are optimized for each of several different amplitudes of inertial acceleration of beams 22a, 22b. Bobbins 27a, 27b, 27c are supported by bobbin support members 59a while magnet stacks 28a, 28b, 28c are supported by magnet stack support members 59b. Design parameters that can be altered in order to optimize a coil/magnet stack configuration for a particular input vibration amplitude include magnet strength, dimensions of magnet, gap between magnets, coil dimensions, number of coil turns, and wire size used to wind coils. Parameters for one such design are illustrated in FIG. 7c

As an example, reducing the wire size will allow for increasing the number of turns in the coil (without changing its overall dimensions). This will result in higher voltage output, but lower current output. In a case where very little input vibration amplitude is expected, this configuration would be advantageous. It would allow for the voltage to reach the minimum usable value (e.g., 3.3V) even with low input vibration. If a large vibration input is present, then a smaller number of turns using larger wire would be favored. This would allow for higher current flow (due to reduced resistance in the coil).

A single coil with taps could also be used. In this case the taps provide the equivalent of multiple coils. Output of multiple coils, each with its own stack, or a tapped coil can be arranged in parallel or in series to provide greater current or greater voltage respectively.

Providing redundant copies of separate windings surrounding stacks of stationary magnets mounted on the vibrating beams also substantially improves fault tolerance, allowing at least some electrical energy to be generated in the event connection is lost to some of the coils.

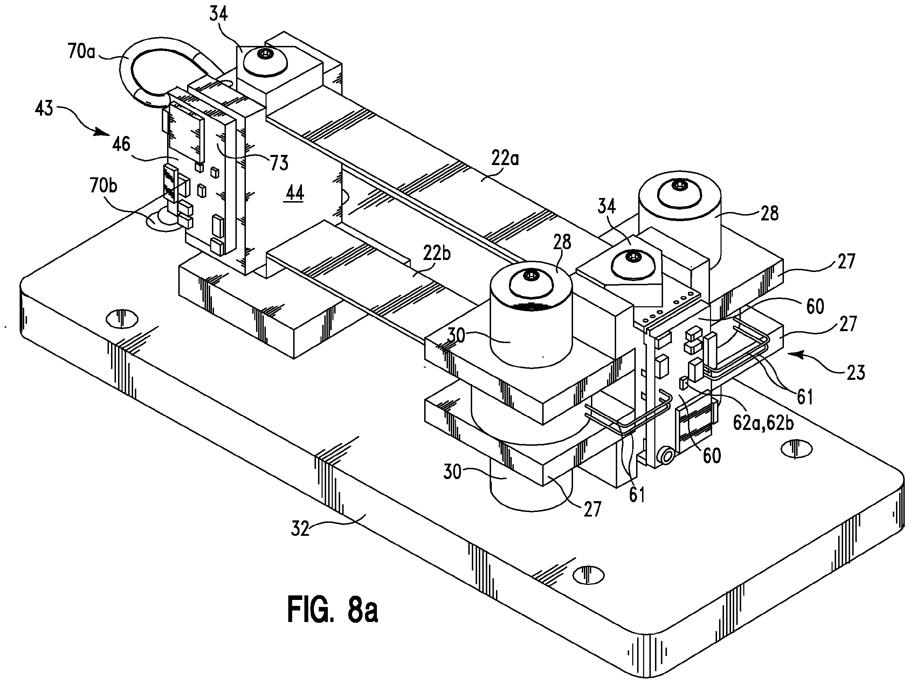

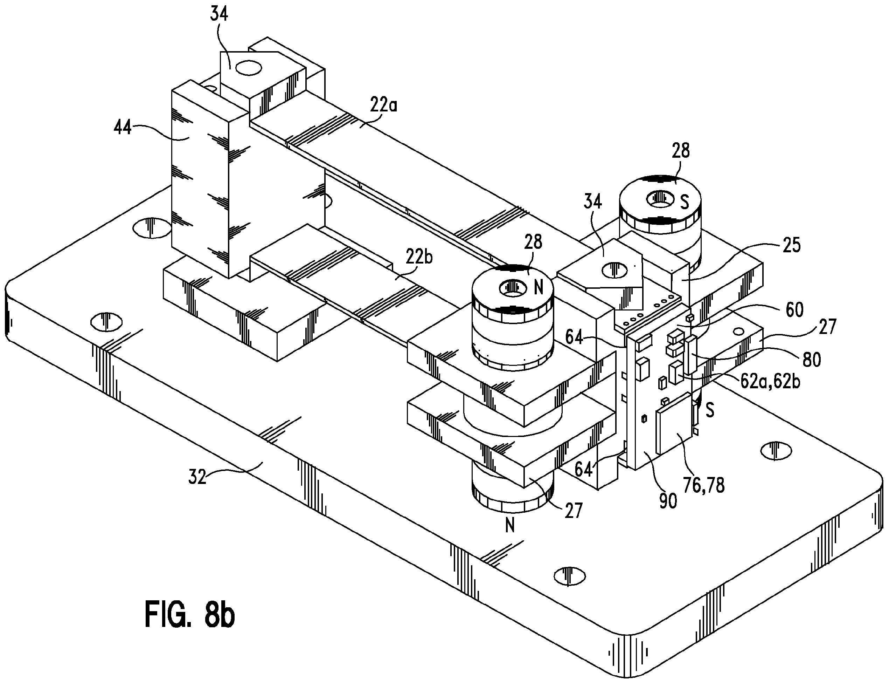

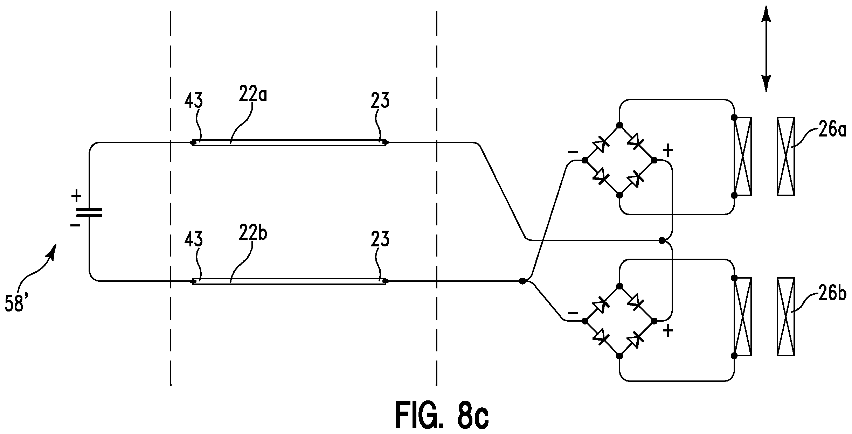

In one embodiment, printed circuit board 60 is provided that is mounted on vibrating parallelogram mounted beams 22a, 22b and moves with coils 26 that are also mounted on beams 22a, 22b, as shown in FIG. 8b. In this embodiment, instead of wires from each coil 26a, 26b being connected directly to beams 22a, 22b, wires 61 from each coil are connected to their own independent full bridge rectifier 62a, 62b on printed circuit board 60, as shown in FIG. 8a, converting the alternating current generated in each coil 26 into direct current. The direct current output of full bridge rectifiers 62a, 62b, can now be combined without risk of destructive interference resulting from a phase difference. In one embodiment, wires 64 from the combined direct current output from all the full bridge rectifiers 62a, 62b are soldered to beams 22a, 22b for conducting the direct current to a load, such as stationary circuit board 73 that is located off of beams 22a, 22b, as shown in FIG. 8a, or storage element 58', as shown in FIG. 8c.

The rectifiers also prevent current generated in one coil from being dissipated in another coil. In addition, parameters of the separate coils can be optimized independently of parameters of other coils.

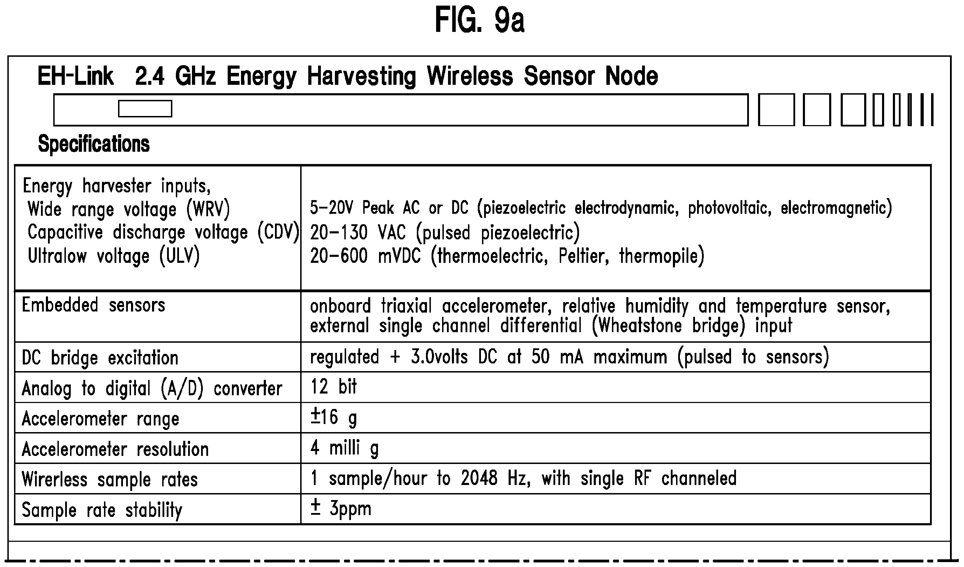

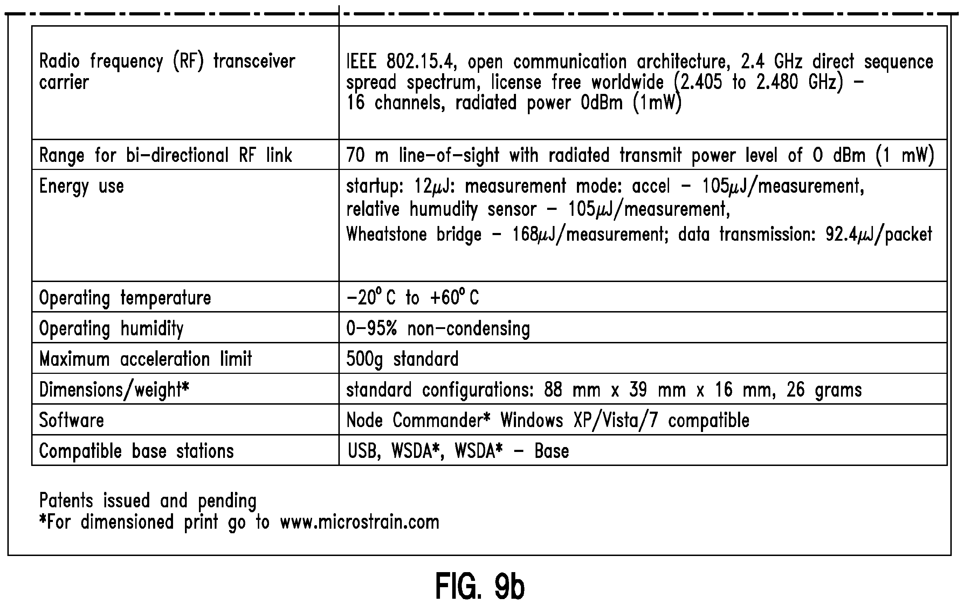

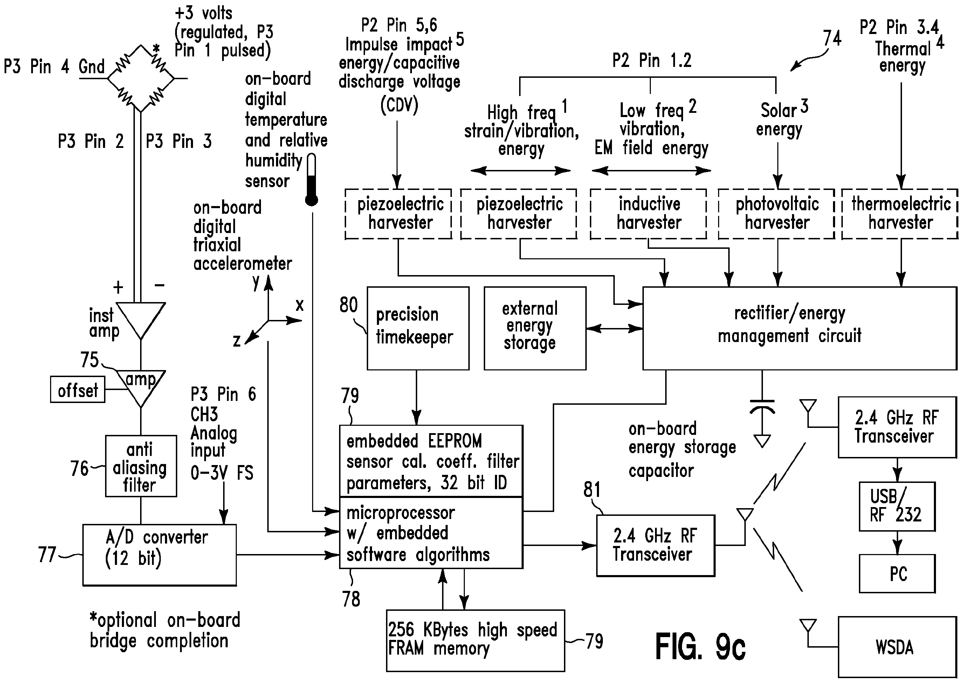

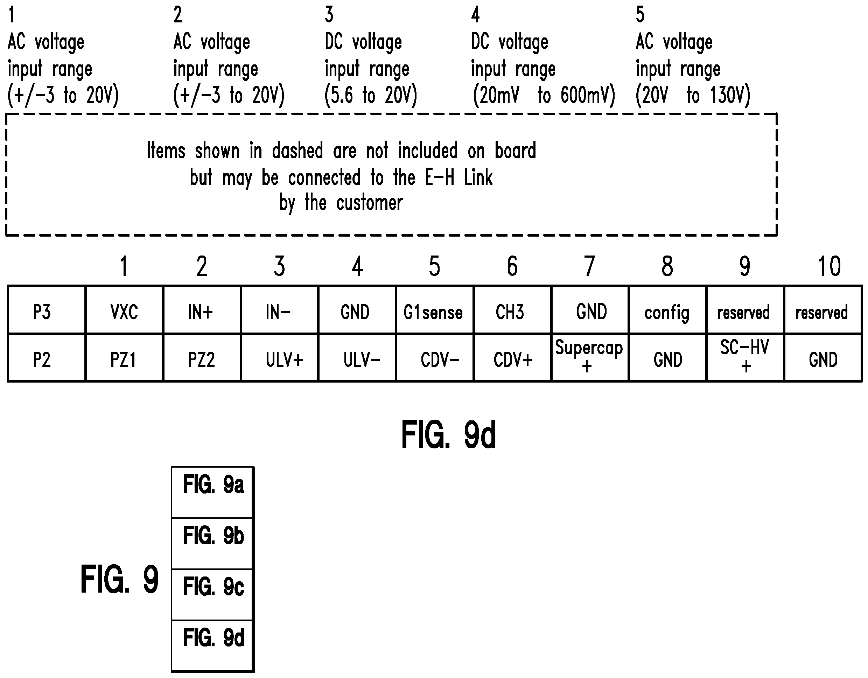

In this embodiment, wires 70a, 70b extending from stationary ends 72a, 72b of beams 22a, 22b can provide the direct current generated in coil 26 and rectified in rectifiers 62a, 62b for operating a load, such as other electronic equipment, integrated on separate stationary printed circuit board 73. The other electronic equipment may include sensor 74, instrumentation amplifier 75, filter 76, analog to digital converter 77, microprocessor 78, memory 79, precision timekeeper 80, and RF transmitter or transceiver 81 for an EH link, as shown in FIG. 8a and in the block diagram of FIG. 9 of the attached EH-Link data sheet.

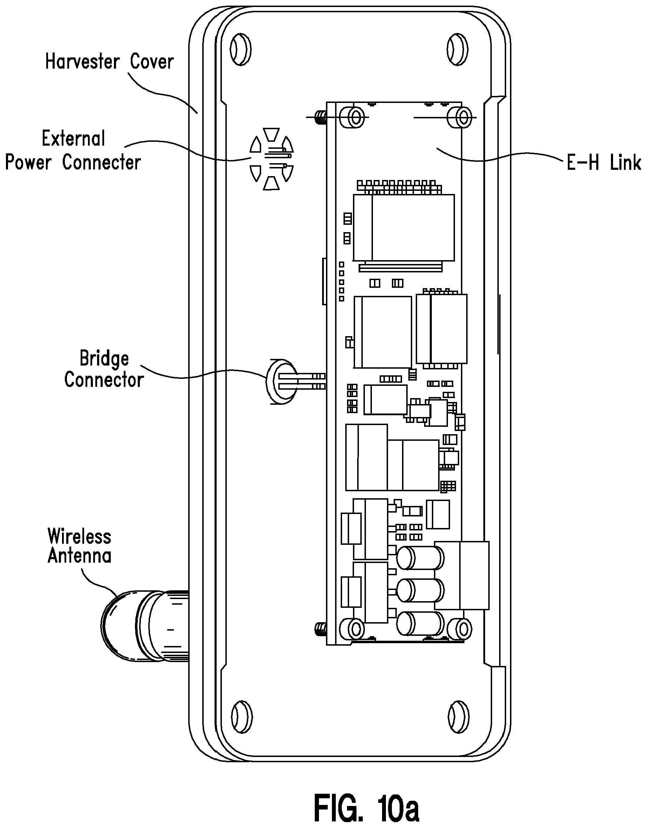

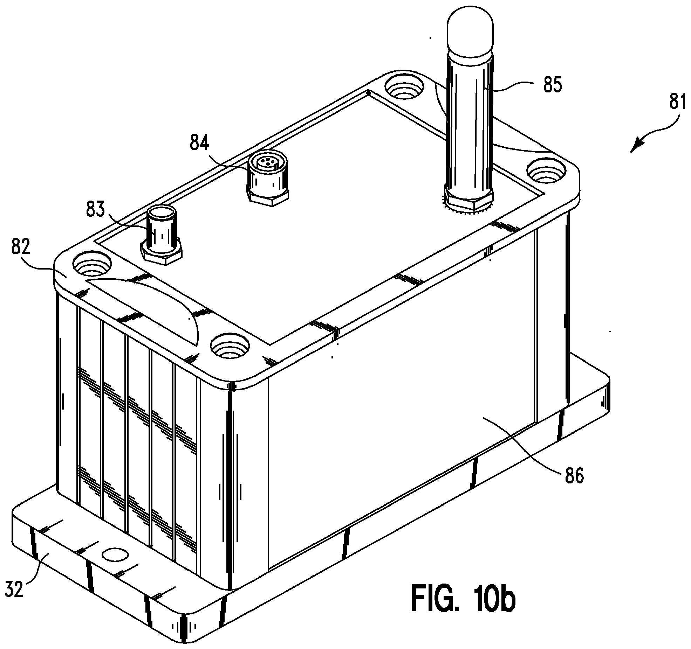

In one embodiment beams 22a, 22b, their mounting structures, and this other electronic equipment are all in one box 81, as shown in FIGS. 10a, 10b. Box 81 includes base 32, cover 82, external power connector 83, bridge connector 84, wireless antenna 85, and shell 86. The EH link and separate stationary printed circuit board 73 may be mounted to cover 82. For example, applicants have mounted an energy harvester tuned to provide power for an EH Link, available from MicroStrain, Inc., Williston Vermont, all in one box 81 that can be mounted to receive vibrations from a source of vibrational energy, such as a vehicle, a machine, a bridge, a building, or another civil structure.

In another embodiment, other circuits that use the direct current generated in coil 26 are mounted on printed circuit board 60 to vibrate with beams 22a, 22b, with coil 26, and with full bridge rectifiers 62a, 62b, as shown in FIG. 8b. For example, sensors 74, thermocouples, and air humidity sensors, as shown in FIG. 9, can be so mounted. Other components can also be mounted, including analog to digital converter 77, microprocessor 78, and RF transceiver 81.

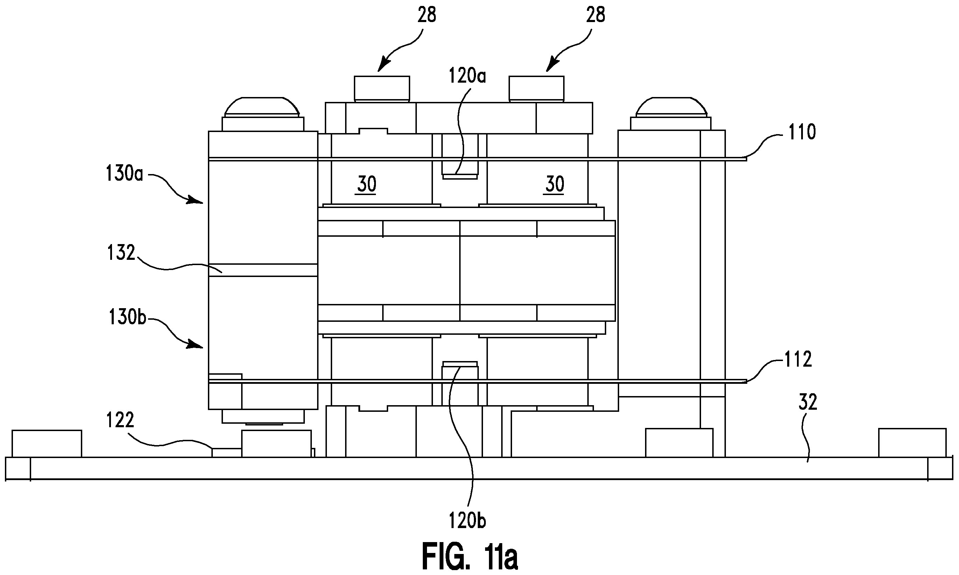

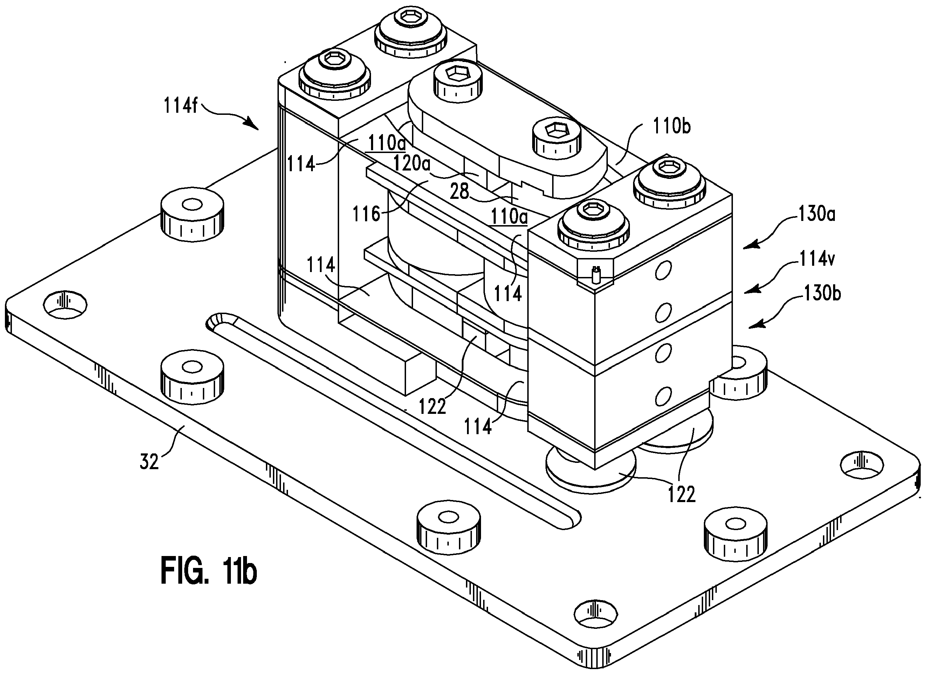

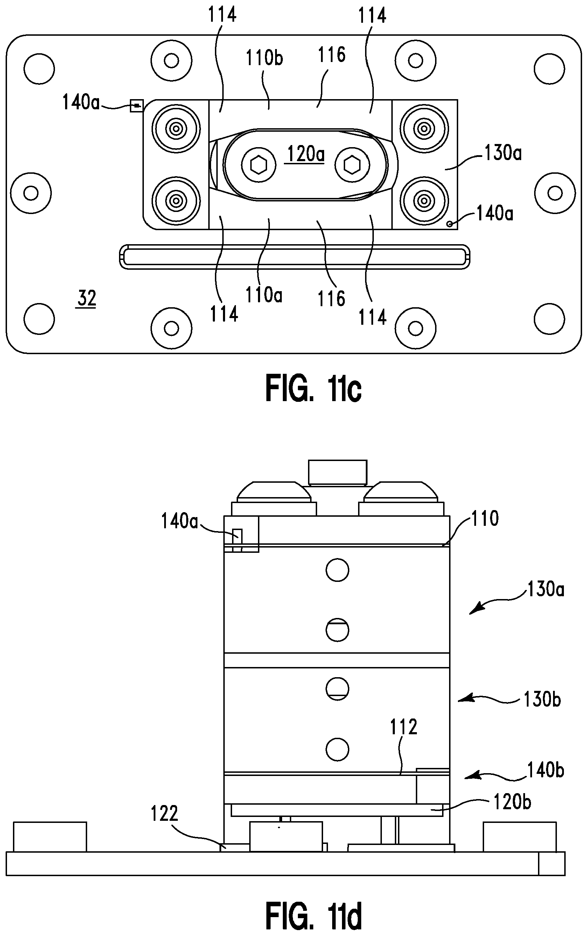

Prototype energy harvester 108 was built by applicants that included parallelogram mounted beam spring elements 110, 112. Each parallelogram mounted beam spring element included a pair of flared beam spring element arms 110a, 110b, 112a, 112b, as shown in FIGS. 11a-11d. Applicants found that shaping the four beam spring element arms 110a, 110b, 112a, 112b so they are wider at both end regions 114 than in center region 116 provided a more uniform stress and strain in beam spring element arms 110a, 110b, 112a, 112b as they vibrated, enhancing the lifetime of vibrating beam spring element arms 110a, 110b, 112a, 112b.

Applicants recognized that the bending deformation during vibration provides stress at all points in the beams, and that stress could lead to failure if the stress exceeds a threshold. They also recognized that the highest stress is at ends of the beam. This because both ends of the beam are in motion right near a clamped portion where there is no motion while the middle portion of the beam is adjacent other regions that are also bending. As stress is load/cross sectional area, the present applicants put more material at the ends of the beam to reduce the stress concentration there. For a beam with a desired spring constant they recognized that making the entire spring wider would reduce stress concentration but would also make the spring much stiffer. They further recognized that they could retain the desired spring constant if they made the beam wider at the ends where the stress was greatest while making the beam narrower in the middle where the stress was least.

In the same prototype, applicants also included over-range stops 120a, 120b along center regions 116 and over-range stops 122 below vibrating end region 114v. Over-range stops 120a, 120b, 122 prevent further displacement of beam spring element arms 110a, 110b, 112a, 112b beyond over-range stops 120a, 120b, 122, thereby protecting beam spring element arms 110a, 110b, 112a, 112b from breakage and/or fatigue that might otherwise result if exposed to vibration energy that could cause such larger displacement. Over-range stops 120a, 120b were mounted to stationary stack 28 of permanent magnets 30. Over-range stops 122 were mounted to frame case 32. Additional stops connected to a cover, not shown, similarly limit upward displacement of vibrating end region114v. The present applicants recognized that when a mass hits a stop a force is exerted on the mass to bring the mass to a stop. They arranged the location of the stops so the force was oriented through the center of gravity of the moving part so the mass would come to a stop without torques on the moving parts that could overload or damage the springs.

In the same prototype, applicants replaced spring spacer 25 with stainless steel clamps 130a, 130b that clamped to ends of beam spring elements 110, 112, respectively and were physically and electrically separated from each other by insulating member 132. Stainless steel clamps 130a, 130b provided mass, facilitated soldered wire termination, and reduced eddy current effects, thereby enhancing performance over the aluminum spring spacer previously used to connect beam spring elements 110, 112. The present applicants recognized three properties of the stainless steel that provided advantage: a dense material so they could get a large mass in a small space; a material that has low magnetic permeability; and a material that is not highly electrically conductive. Other materials, such as tungsten, titanium, and a ceramic, could also be used.

The present applicants recognized that providing a larger mass allows larger energy conversion as the mass moves according to the input vibration and will resonate with that frequency. Making the mass bigger and the spring stiffer provides more energy to harvest with each cycle of vibration.

The present inventors also recognized that a material with low magnetic permeability was desirable so the mass could move past the magnets without magnetic interaction that would restrict free vibration. Similarly, for the beams. They found that stainless steel for the mass and beryllium copper for the beams provided sufficiently low magnetic permeability to avoid such interaction.

The present inventors also recognized that a material with low electrical conductivity was desirable to reduce or avoid eddy currents. As the vibrating beam is moving past the strong magnets eddy currents could be generated in a highly conductive material, and generating eddy currents would dampen movement of the vibrating beam, lowering energy conversion. They recognized that one way to reduce eddy currents was to use a material that had substantially lower electrical conductivity than a material such as aluminum. They found that stainless steel had sufficiently low electrical conductivity to avoid such eddy current losses while still having sufficient conductivity to allow current flow from coils to beams. Similarly, eddy currents could be avoided in beams made of beryllium copper, bronze, titanium or certain kinds of stainless steel, or by using laminated sheets.

In the same prototype, applicants also included tabs 140a, 140b extending from beam spring elements 110, 112 to facilitate soldering to stainless steel clamps 130a, 130b. Beam spring elements 110, 112 carry electric current from tabs 140a, 140b at vibrating end regions 114v to tabs (not shown) at fixed end regions 114f. From there connection is made to circuits that use the energy generated by of energy harvester 108, as described herein above. Tabs 140a, 140b are contiguous with beam spring elements 110, 112 that are easy to heat and solder to stainless steel clamps 130a, 130b at the edge near where wire extends from coil bobbin 27.

While the disclosed methods and systems have been shown and described in connection with illustrated embodiments, various changes may be made therein without departing from the spirit and scope of the invention as defined in the appended claims.

## Claims

1. A device for harvesting energy from a vibrating substrate, comprising a base, a plurality of beams, a first coil of wire, and a first permanent magnet, wherein said base is for mounting to the substrate for receiving vibrational energy derived from the substrate, wherein said plurality of beams has a first end and a second end, wherein said first end is stationary with respect to said base and connected to receive vibrational energy from said base so said second end can vibrate, wherein said first coil of wire is mounted to vibrate with said plurality ofbeams, wherein said first coil of wire extends around said first permanent magnet so current is induced in said first coil of wire when said first coil of wire vibrates, wherein said first coil of wire is electrically connected so electricity derived from said induced current is conducted along said beam of said plurality of beams.

2. A device for harvesting energy from a vibrating substrate, comprising a base, a plurality of beams, a first coil of wire, a first permanent magnet, a second coil of wire, and a second permanent magnet, wherein said base is for mounting to the substrate for receiving vibrational energy derived from the substrate, wherein said plurality of beams has a first end and a second end, wherein said first end is for connection for receiving vibrational energy derived from the substrate, wherein said first coil of wire and said second coil of wire are mounted to vibrate with said plurality of beams, wherein said first coil of wire extends around said first permanent magnet, wherein said second coil of wire extends around said second permanent magnet, wherein said first coil of wire is optimized for receiving energy having a first intensity and wherein said second coil of wire is optimized for receiving energy having a second intensity different from said first intensity.

3. A device for harvesting energy from a vibrating substrate, comprising a base, a plurality of beams, a first coil of wire, a first permanent magnet, a second coil of wire, a second permanent magnet, a first diode, and a second diode, wherein said base is for mounting to the substrate for receiving vibrational energy derived from the substrate, wherein said first coil of wire, said second coil of wire, said first diode and said second diode are mounted to vibrate with said plurality of beams, wherein said plurality of beams has a first end and a second end, wherein said first end is for connection for receiving vibrational energy derived from the substrate, wherein said first coil of wire extends around said first permanent magnet, wherein said second coil of wire extends around said second permanent magnet, wherein said first coil of wire is connected to said first diode and wherein said second coil of wire is connected to said second diode, wherein said first diode is connected to rectify current induced in said first coil of wire and wherein said second diode is connected to rectify current induced in said second coil of wire.

4. A device for harvesting energy from a vibrating substrate, comprising a base, a beam, a first coil of wire, a first permanent magnet, and a load, wherein said base is for mounting to the substrate for receiving vibrational energy derived from the substrate, wherein said beam has a first end and a second end, wherein said first end is stationary with respect to said base and connected to receive vibrational energy from said base so said second end can vibrate, wherein said first coil of wire is mounted to vibrate with said beam, wherein said first coil of wire extends around said first permanent magnet so current is induced in said first coil of wire when said first coil of wire vibrates, wherein said load is mounted to vibrate with said beam and is electrically connected to receive electricity derived from said induced current.

5. A device for harvesting energy from a vibrating substrate, comprising a base, a beam, a first coil of wire, and a first permanent magnet, wherein said base is for mounting to the substrate for receiving vibrational energy derived from the substrate, wherein said beam has a first end and a second end, wherein said first end is stationary with respect to said base and connected to receive vibrational energy from said base so said second end can vibrate, wherein said first coil of wire extends around said first permanent magnet so current is induced in said first coil of wire when said first coil of wire vibrates, wherein said beam is shaped so end regions are wider than a central region.

6. A device for harvesting energy from a vibrating substrate, comprising a base, a parallelogram of stacked beams, end connector, a first coil of wire, and a first permanent magnet, wherein said base is for mounting to the substrate for receiving vibrational energy derived from the substrate, wherein each beam of said parallelogram of stacked beams has a first end and a second end, wherein said first end is stationary with respect to the base and connected to receive vibrational energy from said base so said second end can vibrate, wherein said second ends are connected to said end connector, wherein said first permanent magnet is stationary with respect to said base, wherein said first coil of wire is mounted to vibrate with said parallelogram of stacked beams, wherein said first coil of wire extends around said first permanent magnet, wherein when said parallelogram of stacked beams vibrates, said first coil of wire vibrates with respect to said first permanent magnet and a first current is induced in said first coil of wire.

7. A device as recited in any preceding claim, further comprising a second permanent magnet, wherein said first and said second permanent magnets are stacked to provide a first stack of permanent magnets, wherein said first and said second permanent magnets are oriented to have first same poles facing each other.

8. A device as recited in claim 7, further comprising a second coil of wire and a second stack of permanent magnets, wherein said second coil of wire is mounted to vibrate with said stacked beams, and wherein said second coil of wire extends around said second stack of stationary magnets, wherein said second stack of permanent magnets includes a third permanent magnet and a fourth permanent magnet, wherein said third and said fourth permanent magnets are oriented to have second same poles facing each other, wherein said second same poles are opposite said first same poles, wherein when said parallelogram of stacked beams vibrates, said second coil of wire vibrates with respect to said second stack permanent magnet and a second current is induced in said second coil of wire.

9. A device as recited in claim 8, further comprising a first diode and a second diode mounted to vibrate with said stacked beams, wherein said first diode is connected to rectify said induced current in said first coil of wire and wherein said second diode is connected to rectify said induced current in said second coil of wire.

10. A device as recited in claim 9, wherein said first coil of wire is optimized for receiving energy having a first intensity and wherein said second coil of wire is optimized for receiving energy having a second intensity different from said first intensity.

11. A device as recited in any preceding claim, wherein said first coil is electrically connected to a beam of said parallelogram of stacked beams for conduction of said induced current along said beam of said parallelogram of stacked beams to said first end.

12. A device as recited in any preceding claim, further comprising a first diode mounted to vibrate with said stacked beams, wherein said first diode is connected to rectify said induced current in said first coil of wire, wherein direct current output of said first diode is connected to a beam of said parallelogram of stacked beams for conduction to said first end.

13. A device as recited in any preceding claim, further comprising a load mounted to vibrate with said stacked beams, wherein said load is connected to receive electricity derived from said induced current in said first coil of wire.

14. A device as recited in claim 13, wherein said load includes a microprocessor and a transmitter.

15. A device as recited in any preceding claim, wherein each beam of said parallelogram of stacked beams is shaped to provide substantially uniform strain.

16. A device as recited in any preceding claim, wherein each beam of said parallelogram of stacked beams is shaped so end regions are wider than a central region.

17. A device as recited in any preceding claim, further comprising a stop to limit displacement amplitude of said parallelogram of stacked beams.

18. A device as recited in any preceding claim, further comprising a mass wherein said mass is fabricated of a material that facilitates soldered wire termination and has substantially less eddy current effects than aluminum.
